# EUROPEAN PATENT APPLICATION

(11) **EP 2 039 661 A2**
(43) Date of publication of application: **25.03.2009**
(21) Application number: 08164418.9
(22) Date of filing: 16.09.2008
(51) Int. Cl.: C03B 9/41

(54) **Control for I.S. Machine**

(30) Priority: 20.09.2007 US 903248
(71) Applicant: Emhart Glass S.A., 6330 Cham (CH)
(72) Inventor: Moriarty, John P., Longmeadow, MA 01106 (US); Moriarty, Kevin, Hampden, MA 01036 (US)
(74) Representative: Warren, Anthony Robert

(57) **Abstract**

An I.S. Machine (10) has a plurality of sections (12) each of which has a control (19) including a blow side control portion (20) on the operator's side (the blow mold side) of conveyor (18), and a blank side control portion (22) on the other side (the blank mold side) of the machine (10). The control portion (22) has a blank side operator interface (28) and the control portion (20) has a blow side operator interface (48). The control portion (22) also has controller (24) which receives a sync signal from a machine control (21) and data from a machine data server (23). The controller operates the section in accordance with a number of cycles commanded by an operator the blank side operator interface (28) and the blow side operator interface (48).

## Description

The present invention relates to I.S. machines which transform gobs of glass into glass containers in a two-step process, and more particularly, to the electronic control for such machines.

An I.S. Machine is defined by a plurality of individual identical sections. Each section receives gobs of molten glass through the open top of a closed blank mold. A baffle mechanism is then displaced to close the blank mold whereupon air is blown into the mold to settle the gob in the mold. The gob is then formed into a parison either in a blow process where pressurized air is blown up into the molten gob to form the parison or in a press process where a plunger is displaced vertically upwardly into the gob. Cooling air can pass through the blank mold sides, halves or segments to cool the outer surface of the parison and when the surface has been suitably chilled, the baffle will be removed and the blank mold will open.

. The parison will be transferred, by a transfer mechanism, to a location where blow mold sides, halves or segments can be closed around the parison. A blow head will be located on top of the blow mold and the parison will be blown into a container. Cooling air will be passed through the blow mold to chill the outer surface of the formed container and, when it has been sufficiently chilled, the blow head will be removed, the blow mold will be opened, and the container will be removed from the section and deposited on a dead plate by a take out mechanism.

A defined run cycle controls each of the sections, with cycles starting at suitable offsets per a desired firing order. During a run cycle, each mechanism will be advanced and retracted (electrically operated solenoids, which control pneumatic mechanisms or servo motors will be turned "on" and "off") and all process air, like blank mold cooling air will be turned "on" and "off." Each of these state changes is called an "event," and a run cycle defines the time in a cycle when each event occurs. A timing control carries out such a cycle program.

One of the first electronically timed I.S. Machines was developed by Ball Corporation and is disclosed in U.S. Patent No. 3,762,907. The Ball design controlled a pneumatically operated I.S. Machine, and had solenoid-operated valves at each section and a remote control room housing an electronic timing control. For the past 35 years, every electronic timing system has had this design, examples of which include:
Emhart Glass: U.S. Patent No. 3,905,793;
Owens-Illinois: U.S. Patents Nos. 6,212,909, 7,017,373;
Maul: U.S. Patent No. 5,247,450;
Hermann Heye: U. S. Patent No. 7,054,710;
Bottero: U.S. Patent Application Publication No. 2002/0052669; and
Vitro: U.S. Patent No. 4,783,746.

It is an object of the present invention to provide an improved I. S. Machine electronic control architecture.

According to the present invention there is provided an I.S. machine, and a method of operating sections of an I.S. machine, as defined in claims 1 and 10 respectively.

Reference will now be made to the accompanying drawings, which illustrate an exemplary embodiment incorporating the principles of the invention, and in which:-

FIG. 1 is a schematic oblique view of an I. S. Machine made in accordance with the teachings of the present invention; and

FIG. 2 is a schematic showing of the stand alone electronically timed control for each machine section.

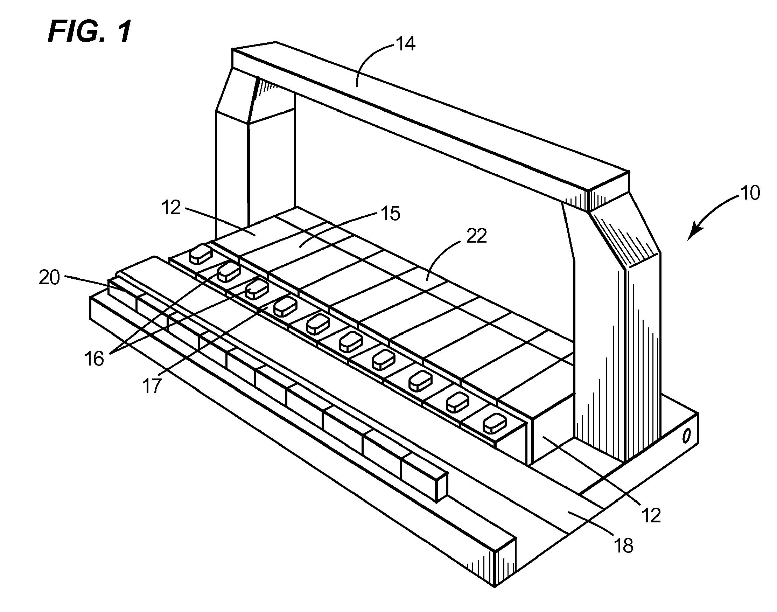

Referring first to FIG. 1, the disclosed I. S. Machine 10 has ten self-contained sections 12, which are straddled by an overhead beam 14, which supports a gob distributor (not shown). Each self-contained section has a section assembly 15. A "section assembly" as used herein and as schematically illustrated as a box would include a section frame or "box" and those section mechanisms that are mounted on the section frame, i.e., a blank station mold open and close mechanism, a baffle mechanism, a blow station mold open and close mechanism, a mechanism for transferring a parison formed at the blank station to the blow station, a blow head mechanism, and a takeout mechanism for transferring a container formed at the blow station to a dead plate. As shown, pusher mechanisms 16 would transfer the containers deposited on the dead plates 17, onto a moving conveyor 18.

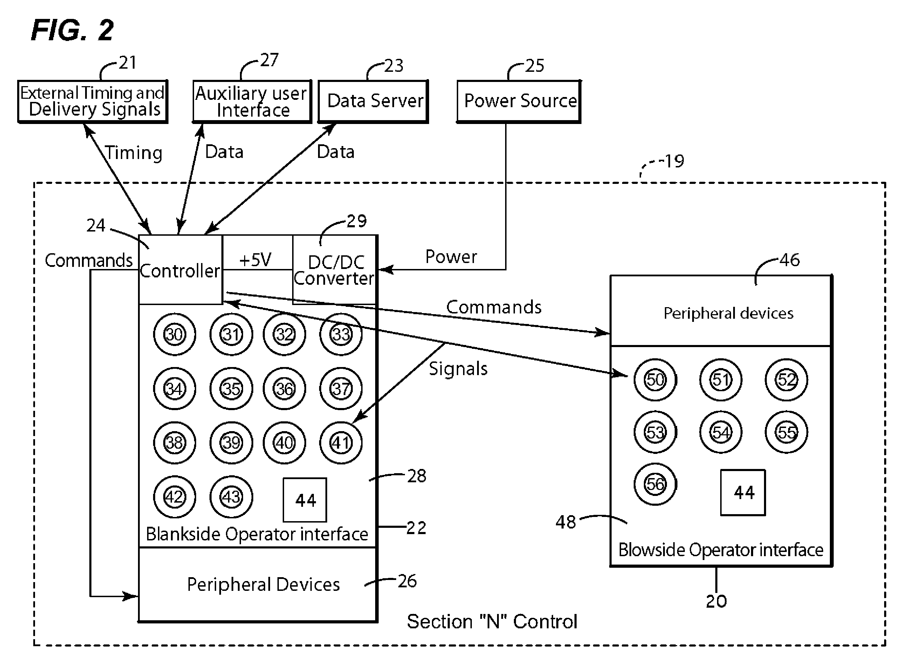

Each of the "N" sections has its own Control 19 (shown in FIG. 2), which operates the mechanisms and air processes for that section pursuant to the event programs that define the desired cycles of the section. Each Control 19 has two portions. On the operator's side of the conveyor 18 is a blow side control portion 20 and on the other side of the I. S. Machine 10 is a blank side control portion 22.

An exemplary Control 19 including the blank side control portion 22 and the blow side control portion 20 for each of the sections 12 of the I. S. Machine 10 shown in FIG. 1 is shown in Figure 2. Each Control 19 has a number of external connections: Timing Signals from External Timing and Delivery Signals from an external Machine Control 21; Data (set up, configuration including offsets, and diagnostics) from a Data Server 23; Power from a Power Source 25 (which could for example, be DC Power); and Data to and from an Auxiliary User Interface 27 (a hand held terminal, for example).

The blank side portion 22 includes a Blank Side Operator Interface 28, which has a number of operator-actuated buttons. The blank side control portion 22 also includes a Controller 24 which can operate programmed section cycles such as a "normal start" 32, where the section will operate to produce containers (one button is shown but there preferably are two buttons), normal stop 30, alternate stop 31, delivery 33, first and second hot end ware rejects 34, 35 (assuming double gob operation), cold blank mold 36, swab 37, Blank Mold Open/Close 38, Blank Mold Disable 39, Baffle Up/Down 40, Baffle Disable 41, and first and second Plunger Up/Down 42 and 43.

These cycles are representative, but are not intended either to be the exact cycles present or to be all of the cycles that could be present. These cycles can only be started by an operator at the section. While shown as push button switches, the buttons could take other forms such of operator-actuatable means as touch screen input areas or buttons. An input 44 for the Auxiliary User Interface 27 can also be located on this interface.

The Controller 24 is powered by a Power Supply 29 (supplied with Power from a Power Source 25), which could supply +5V via a DC/DC Converter 29 (+18 - +32V to +5V @ 3 Amps, for example). The Controller 24 is synchronized by Sync Signals from the external Machine Control 21 and performs these cycles by supplying Commands to Peripheral Devices 26 in the blank side control portion 22 and Peripheral Devices 46 in the blow side control portion 20 of the section control 19, or by sending a Delivery Signal to the Machine Control 21.

The blow side section control portion 20 also includes a Blow Side Control Operator Interface 48. This Blow Side Control Operator Interface 48 also has buttons or equivalent means that start cycles that are only to be started by an operator while at the section, i.e., normal stop 50, alternate stop 51, normal start 52 (one button is shown but there preferably are be two buttons), and delivery 53, cold blow mold 54, or neck ring change 55, and blow head down 56. These buttons are representative, but not intended either to be the exact cycles present or to be all the cycles that would be present.

In an I. S. Machine 10 having pneumatically operated mechanisms, the Peripheral devices 26 and 46 can be solenoid operated valves operated by digital I/O commands, and these solenoid operated valves can be either individually located or located within a valve block. In an I. S. Machine 10 having servo operated mechanisms, the Peripheral devices 26 and 46 can be servo motors, and the commands can be analog or bus communications, for example.

Although the foregoing description of the present invention has been shown and described with reference to particular embodiments and applications thereof, it has been presented for purposes of illustration and description and is not intended to be exhaustive or to limit the invention to the particular embodiments and applications disclosed. It will be understood that various modifications may be made without departing from the scope of the present invention as defined in the appended claims.

## Claims

1. An I.S. Machine for forming gobs of molten glass into glass containers having a plurality of sections each comprising:
a section assembly having a plurality of displaceable section mechanisms;
a section control for controlling the displacement of the plurality of section mechanisms pursuant to a plurality of selected cycles, said section control comprising a blank side control portion and a blow side control portion;
wherein said blank side control portion comprises:
a first plurality of peripheral devices;
a controller; and
a first operator interface including a first plurality of operator-actuatable means operable by an operator to supply signals to said controller that operate said first plurality of peripheral devices to run selected ones of said cycles;
wherein said blow side section control portion comprises:
a second plurality of peripheral devices; and
a second operator interface including a second plurality of operator-actuatable means operable by an operator to supply signals to said controller that operate said second plurality of peripheral devices to run selected ones of said cycles.

2. An I. S. Machine for forming gobs of molten glass into glass containers as defined in Claim 1, wherein said controller comprises:
means for supplying commands to said first and second pluralities of peripheral devices to run said selected cycles;
a data server for supplying data to the controllers of each of said sections; and
an external timing means for supplying sync signals to the controllers of each of said sections.

3. An I. S. Machine for forming gobs of molten glass into glass containers as defined in Claim 1 or 2, wherein at least one of said first and second pluralities of peripheral devices comprises a solenoid operated valve.

4. An I. S. Machine for forming gobs of molten glass into glass containers as defined in Claim 1,2 or 3, wherein at least one of said pluralities of peripheral devices comprises a servo motor.

5. An I. S. Machine for forming gobs of molten glass into glass containers as defined in any preceding claim, wherein said first plurality of operator-actuatable means comprises buttons to initiate one or more of the cycles comprising normal stop, alternate stop, delivery, hot end ware rejects, cold blank mold, swab, Blank Mold Open/Close, Blank Mold Disable, Baffle Up/Down, Baffle Disable, and Plunger Up/Down.

6. An I. S. Machine for forming gobs of molten glass into glass containers as defined in any preceding claim, wherein said second plurality of operator-actuatable means comprises buttons to initiate one or more of the cycles comprising normal stop, alternate stop, normal start, delivery, cold blow mold, neck ring change, and blow head down.

7. An I. S. Machine for forming gobs of molten glass into glass containers as defined in any preceding claim, wherein said blank side control portion is located on the side of the I. S. Machine in which parisons are formed.

8. An I. S. Machine for forming gobs of molten glass into glass containers as defined any preceding claim, wherein said blow side control portion is located on the side of the I. S. Machine in which parisons are blown into glass containers.

9. An I. S. Machine for forming gobs of molten glass into glass containers as defined in any preceding claim, wherein said first plurality of operator-actuatable means comprises buttons in the form of a first touch screen device having said first plurality of buttons contained thereupon, and wherein said second plurality of operator-actuatable means comprises butons in the form of a second touch screen device having said second plurality of buttons contained thereupon.

10. A method of operating sections of an I. S. Machine to form gobs of molten glass into glass containers, each section comprising a section assembly having a plurality of displaceable mechanisms and a section control for displacing the plurality of section mechanisms pursuant to selected cycles, said section control comprising a blank side control portion and a blow side control portion, said method comprising:
operating a first plurality of operator-actuatable means on said blank side control portion to supply signals to a controller included in said blank side control portion to cause said controller to operate a first plurality of peripheral devices included in said blank side control portion to run selected ones of said cycles; and
operating a second plurality of operator-actuatable means on said blow side control portion to supply signals to said controller to cause said controller to operate a second plurality of peripheral devices included in said blow side control portion to run selected ones of said cycles.
